# EUROPEAN PATENT SPECIFICATION

(11) **EP 2 745 824 B1**
(45) Date of publication and mention of the grant of the patent: **05.08.2015**
(21) Application number: 13382475.5
(22) Date of filing: 27.11.2013
(51) Int. Cl.: A61G 3/08, B64D 11/00

(54) **Device for aerial transportation and treatment of patients in litters**
Vorrichtung für Lufttrabsport und Behandlung von Patienten in Tragen
Dispositif de transport aérien et traitement de patients sur civière

(30) Priority: 30.11.2012 ES 201231866
(43) Date of publication of application: 25.06.2014
(73) Proprietor: EADS Construcciones Aeronauticas S.A., 28906 Getafe (Madrid) (ES)
(72) Inventor: De La Fuente Carnero, José Luis, 28906 Getafe (ES); Velasco Vázquez, Luis, 28906 Getafe (ES)
(74) Representative: Elzaburu Marquez, Alberto

(56) References cited:
- EP-A1- 1 738 731
- FR-A1- 2 805 800
- FR-A3- 2 621 296
- US-A- 4 397 432
- US-B2- 6 923 606

## Description

### FIELD OF THE INVENTION

The present invention relates to a device for aerial transportation and treatment of patients in litters which can be installed on commercial aircraft.

### BACKGROUND

The high cost of purchasing and maintaining a fleet of aircraft makes essential to reduce its size adjusting it to the operational needs. Therefore aircraft capable of performing various missions without compromising their availability and minimizing associated adaptation costs are required. This versatility is achieved by changes to the interior layout of the cabin of said aircraft.

Traditionally, these changes in the cabin require a great economic effort that reduces the profitability. In addition, it is necessary to properly plan the time window in which the aircraft shall be in the hangar for the adaptation tasks. All this means that adaptation operations are very expensive and require a long time.

When the above applies to medical missions, such as medical evacuation, for which fleets are often not prepared, the time needed to change the aircraft configuration is critical to ensure an effective response to the unexpected demand for this type of missions.

In purely military aircraft having a rear ramp or a cargo door, load handling systems, typically using rollers, are installed for aeromedical evacuation missions and these systems facilitate configuration changes of these military aircraft. However, the problem posed by configurations of this type is that these load handling systems heavily penalize the operating empty weight of the aircraft.

In a typical civil aircraft, aeromedical evacuation systems currently used are not compatible with the passenger cabin layout if the aircraft is not designed specifically to house these systems.

Thus, in war or in emergency situations such as natural disasters or areas contaminated by chemicals or radiation, there are not sufficient military or civilian aircraft adapted for rapid evacuation of the wounded from the affected areas.

Devices such as the one described in US 6,923,606 comprising litter stanchion sets and passenger seats fixed to a pallet are known in the art. These devices are installed in a transport means as an aircraft when necessary. These devices require complicated operations for its mounting and lack of flexibility for, particularly, their installation on commercial aircraft.

For these reasons, it is desirable to provide devices that allow the aerial transportation and treatment of patients on litters by performing configuration changes to any aircraft that has rails on the floor of his cabin.

Such devices are known e.g. from EP 1 738 731 A1. The present invention is directed to provide such devices.

### SUMMARY OF THE INVENTION

An object of the present invention is to provide a device for aerial transportation and treatment of patients on litters according to claim 1, which can be installed in any aircraft that has rails on the floor of the cabin. In particular, the device developed by the invention can be installed in commercial aircraft comprising rails for the installation of seats designed according to AS 33601 standard, i.e., rails including on its upper side a recessed channel with undulated walls.

More particularly, the device developed by the invention can be installed in an aircraft quickly and easily, without tools, so as to allow an aircraft to be configured to carry out missions of medical care and evacuation of wounded, especially in emergency situations, without further structural modification that disassembly of the seats in the area intended for its installation. The device of the invention is also a modular device that can be tailored to the needs and configured so that suits them.

The device of the invention allows installation in the aircraft cabin of NATO standard litters or any other litter whose dimensions fall within certain ranges as well as the installation of medical equipment for the treatment of intensive care patients.

The device of the invention comprises several structural elements (legs, upright posts, clamping arms of litters, reinforcing members) and several connecting terminals between them that facilitate their installation without the need of using tools. The configuration of, in particular, the connecting terminals of the legs to the rails of the aircraft is an important feature of the device.

The structural elements are formed by metallic profiles, preferably of aluminum, having a transversal square section, that include in their four sides recessed channels with undulated walls such as those of the rails of the AS 33601 standard. This configuration allows the installation of brackets of medical equipment in any side of such structural elements and facilitates the union of the structural elements.

The device of the invention can be installed whether in one side of the cabin of the aircraft, then preferably being configured to house two or more litters (if the height of the cabin allows) or in the central area of the aircraft, being then preferably configured to house four or more litters (if the height of the cabin allows).

Other characteristics and advantages of the present invention will be clear from the following detailed description of embodiments illustrative of its object in relation to the attached Figures.

### BRIEF DESCRIPTION OF THE FIGURES

Figure 1 is a perspective view of an embodiment of the device for aerial transportation and treatment of patients in litters according to the present invention for two litters.
Figure 2 is a perspective view of a leg of the device for aerial transportation and treatment of patients in litters according to the present invention.
Figure 3 is a perspective view of the components of the connecting terminal of the legs of the device for aerial transportation and treatment of patients in litters according to the present invention to the rails of the aircraft.
Figure 4 is a perspective view of an upright post of the device for aerial transportation and treatment of patients in litters according to the present invention.
Figure 5 is a perspective view of a clamping arm of litters of the device for aerial transportation and treatment of patients in litters according to the present invention.
Figure 6 is a perspective view of a horizontal bar connecting the ends of the clamping arms of the device for aerial transportation and treatment of patients in litters according to the present invention.
Figure 7a is a perspective view of the adjustable diagonal element of the device for aerial transportation and treatment of patients in litters according to the present invention and Figures 7b, 7c, 7d, 7e are detailed views of its bottom end in two positions of its braking mechanism.
Figure 8 is a perspective view of the beam used in various structural elements of the device for aerial transportation and treatment of patients in litters according to the present invention.
Figures 9a, 9b, 10a and 10b are perspective views of two embodiments of brackets of medical oxygen bottles or other sanitary equipment.
Figure 11 is a perspective view of one embodiment of the device for aerial transportation and treatment of patients in litters according to the present invention including intensive care elements.
Figure 12 is a perspective view of an embodiment of the device for aerial transportation and treatment of patients in litters according to the present invention for four litters.
Figure 13 is a perspective view of an example of installation of three devices for aerial transportation and treatment of patients in litters according to the present invention.

### DETAILED DESCRIPTION OF PREFERRED EMBODIMENTS

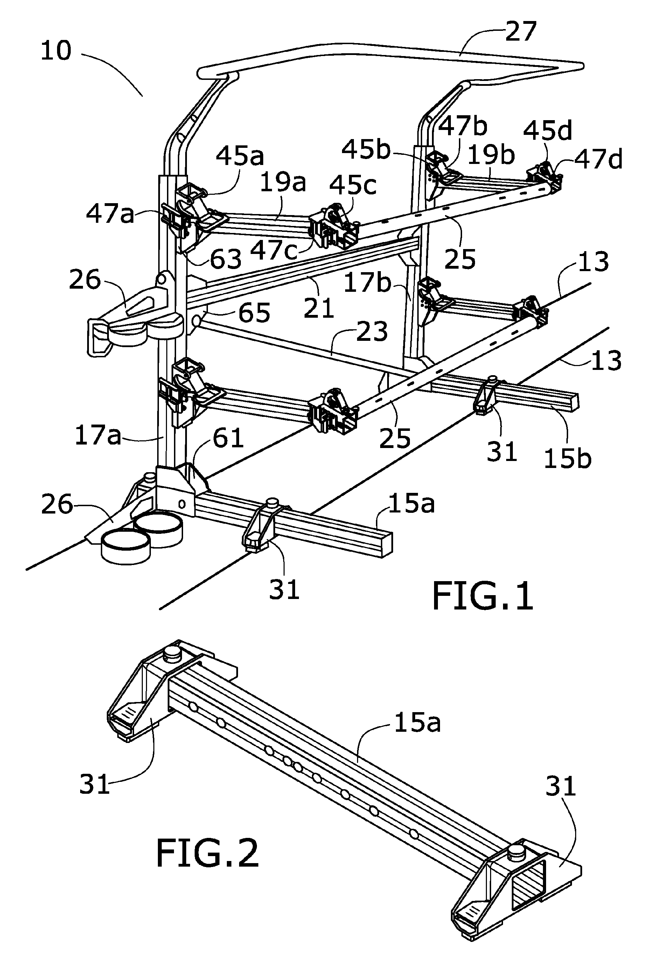

The device for aerial transportation and treatment of patients in litters according to the embodiment present invention shown in Figure 1, intended for installation in a side of an aircraft, comprises the following structural elements:
- Two legs 15a, 15b disposed transversely to the rails 13 of the aircraft and attached to them by first connecting terminals 31.
- Two upright posts 17a, 17b attached to the legs 15a, 15b by second connecting terminals 61.
- Two pairs of clamping arms 19a, 19b joined to the upright posts 17a, 17b by third connecting terminals 63 to hold two litters (not shown). To this end, each pair has receiving elements 45a, 45b, 45c, 45d of litter sticks arranged on the upper face of the clamping arms 19a, 19b. They also include stops 47a, 47b, 47c, 47d attached to their outer sides to prevent longitudinal movement of litters.
- A horizontal beam 21 connected to the upright posts 17a, 17b in a middle position between the two pairs of clamping arms 19a, 19b by fourth connecting terminals 65. This horizontal beam 21 is the element that gives continuity to the two sets of legs and upright posts 15a, 17a; 15b, 17b.
- An adjustable diagonal element 23 for joining the two upright posts 17a, 17b.

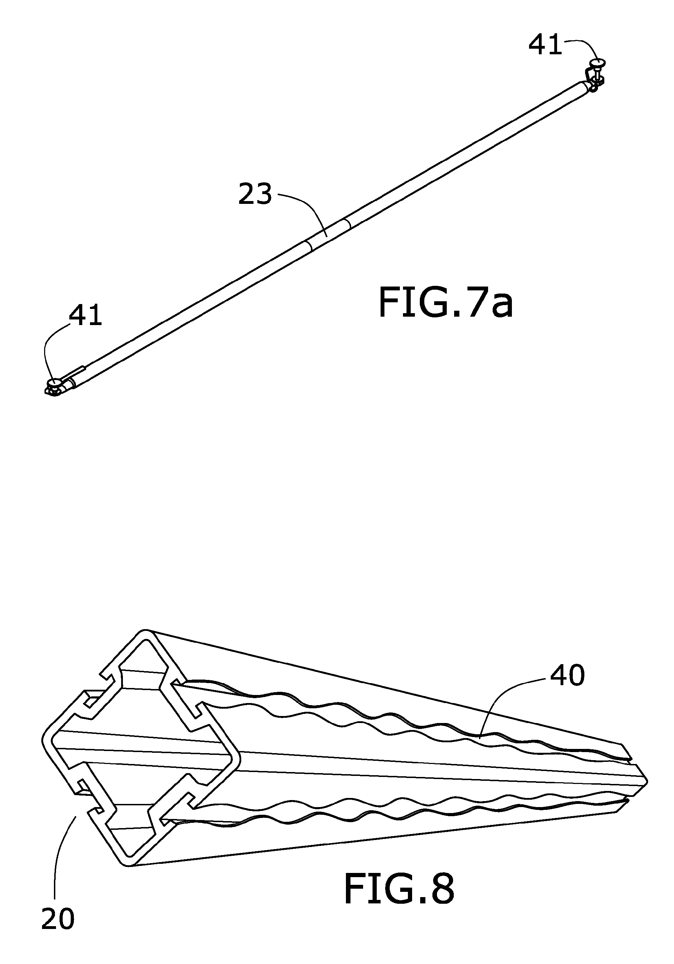

With the exception of the adjustable diagonal element 23, all the mentioned structural elements are hollow metallic profiles 20, preferably aluminum profiles, of square transversal section with recessed channels 40 with undulated walls like the rails according to the AS 33601 standard on their four sides (see Figure 8). This configuration provides them great flexibility to create connections and fix devices every inch with standard systems widely used in the aeronautic industry.

The device 10 according to the embodiment of the invention shown in Figure 1 also comprises:
- Horizontal bars 25 which join the ends of the clamping arms 19a and 19b and can hold medical equipment.
- Brackets 26 for medical oxygen bottles or other equipment needed for treatment of patients.
- Supporting elements of curtains 27, to facilitate privacy of the patients occupying the litters, attached to the top of the upright posts 17a, 17b by pins. To adapt them to the height available in the aircraft extenders that can be coupled to the top of the upright posts 17a, 17b are available. On the other hand, the bases of these supporting elements of curtains 27 are designed with a curved shape to fit the lateral the side of the aircraft.

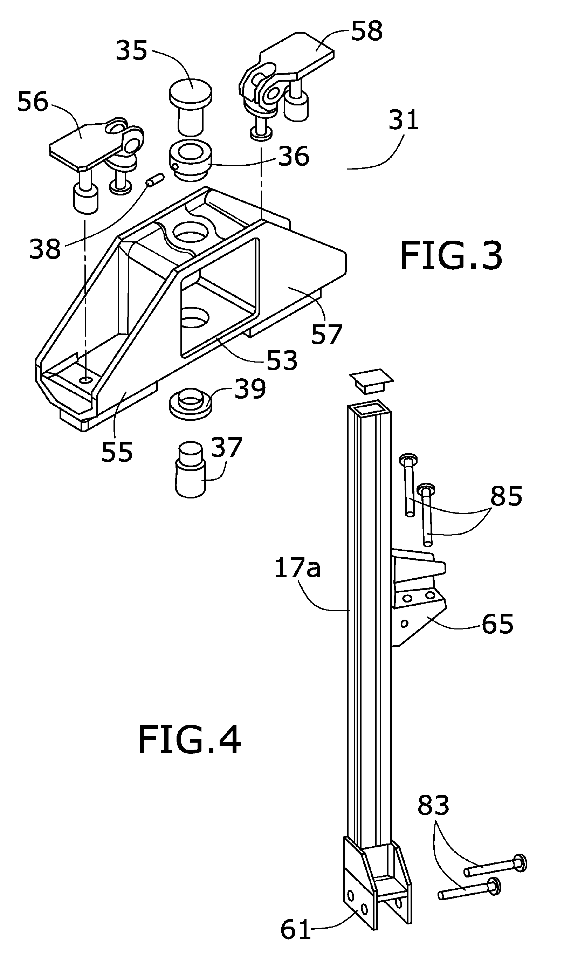

Following Figure 3 it can be seen that the first connecting terminals 31 are configured with a central hollow body 53 and two lateral bodies 55, 57 so that the legs 15a, 15b remain disposed within two first connecting terminals 31 and these are fixed to the rails 13 in said lateral bodies 55, 57 by quick disconnect fixing fittings 56, 58. The central hollow body 53 is configured with a slightly larger section than the legs 15a, 15b to have a certain clearance with them.

The first connecting terminals 31 can move along legs 15a, 15b to be positioned on the rails 13. To that end have an upper pin 35 with two parallel grooves cooperating with a bushing 36 provided with a positioner 38 to secure the upper pin 35 in said grooves defining two working positions. The upper pin 35 may be disposed on the first connecting terminal 31 in a first position where it does not interfere with a leg disposed therein and thus can be moved in position along legs 15a, 15b. It can also be arranged in a second position locking this displacement.

They also have a lower threaded bolt 37 cooperating with a nut 39. The lower threaded bolt 37, when not secured, projects below the first connecting terminal 31 for safety reasons, so as to interfere with the top of the rails 13 of the aircraft and do not allow joining the legs 15a 15b to the rails 13 of the aircraft.

On the other hand, the upper pin 35 and the lower threaded bolt 37 form an axe that allows a slight rotation of the first connecting terminals 31 to facilitate its coupling to the rails 13 of the aircraft and reduce the loads of legs 15a, 15b in cases of demanding loads.

Following Figure 4 it can be seen that the upright post 17a incorporates (by means of, for example, rivets) a second connecting terminal 61 which allows attachment to the leg 15a and a fourth connecting terminal 65 which allows joining him to the horizontal beam 21. These unions are carried out by, respectively, the pins 83, 85 facilitating therefore the installation of the device 10 without tools. For this purpose, the recessed channels 40 of, respectively, the leg 15a and the horizontal beam 21 include engaging holes with said pins 83, 85. Additionally, the second connecting terminals 61 can incorporate a quick-disconnect fixing fitting for attachment to the upper face of the leg 15a.

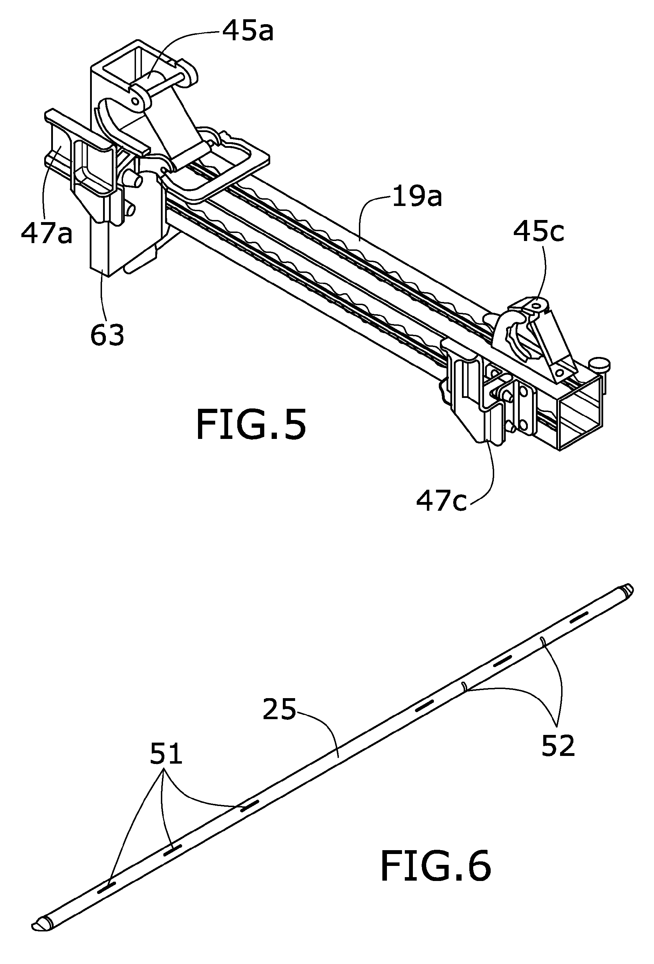

Following Figure 5 it can be seen that the clamping arm 19a incorporates (by means of, for example, rivets) a third connecting terminal 63 which allows attachment to the upright post 17th through a quick-disconnect fixing fitting. It can also be observed that stops 47a, 47c, limiting the longitudinal movement of the litter, avoiding therefore the dangers of a catastrophic landing, are arranged in front of the receiving elements 45a, 45c of the litter sticks. The stop 47a is attached to the third connecting terminal 63 and the stop 47c to the clamping arm 19a. In both cases, the joining is carried out by means of two pins, one fixed to permit rotation of the stop on it and another detachable allowing its withdrawal.

Following Figure 6 it can be seen that the horizontal bar 25 comprises multiple slits 51 that facilitate the installation of medical equipment and projections 52 between them to minimize the rotation of brackets in case they are used for fastening the equipment.

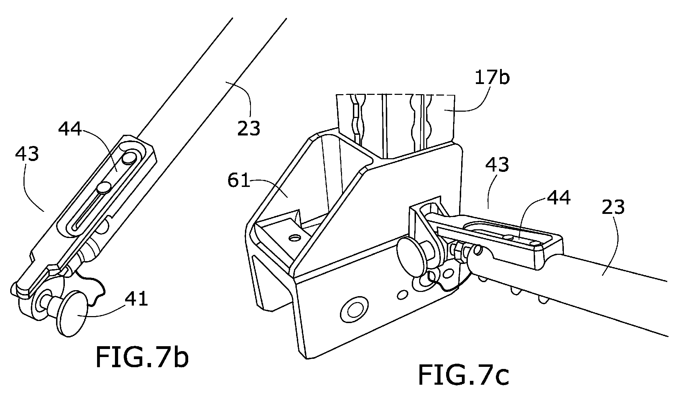

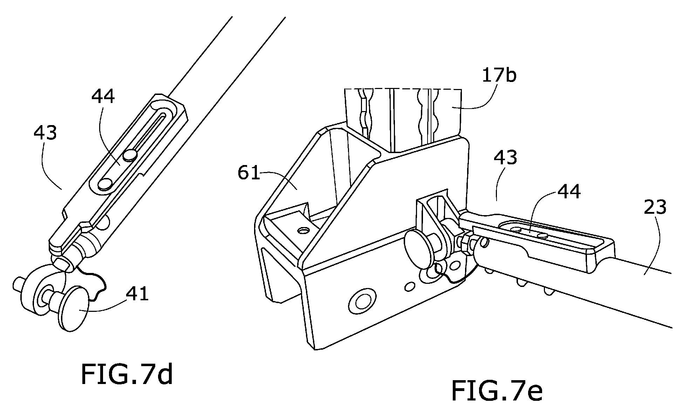

Following Figures 7a, 7b, 7c, 7d, 7e it can be seen that the adjustable diagonal element 23 has threaded terminals 41 for final adjustment of the device 10. Its upper end is attached to the fourth terminal 65 which joins the upright post 17a with the horizontal beam 21 and its lower end to the second terminal 61 which joins the upright post 17b with the leg by pins. By turning the adjustable diagonal element 23 the clearances between the parts of the device 10 are eliminated. At its lower end is equipped with a braking mechanism 43 that prevents relaxation during flight. To prevent that in-flight vibration may rotate the adjustable diagonal element 23 releasing the tension of device 10, the braking mechanism 43 comprises a locking element 44 which is movable manually to fix the adjustable diagonal element 23 to the upright posts 17a, 17b preventing thus any movement of said adjustable diagonal element 23 (Figures 7b, 7c). When the locking element 44 is displaced in the opposite direction (Figures 7d, 7e) the rotation of the adjustable diagonal element 23 is possible.

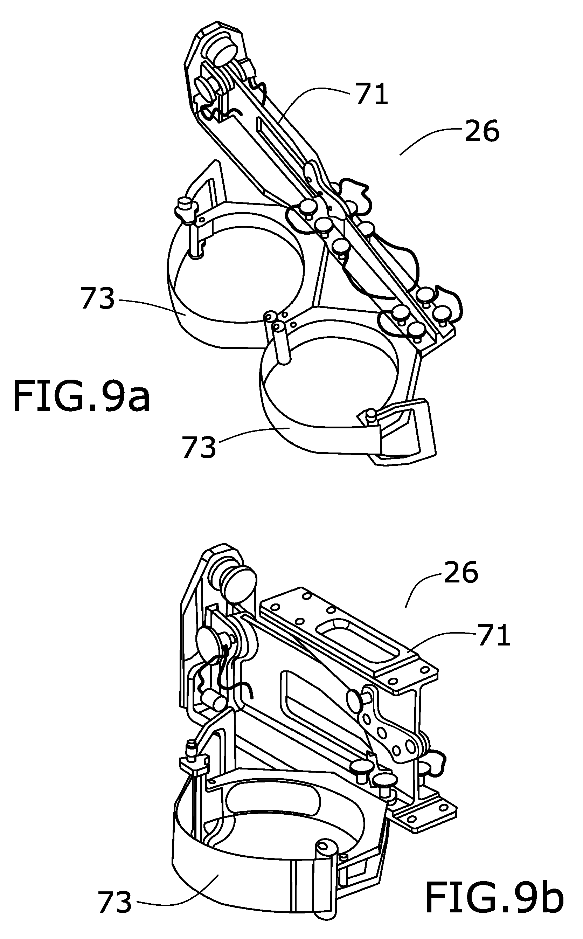

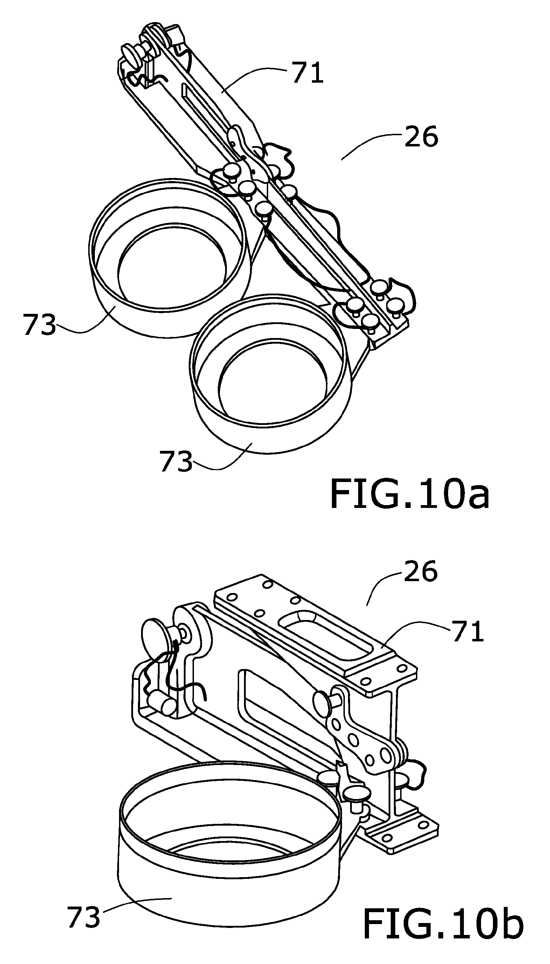

Figures 9a, 9b show brackets 26 of containers of medical products (for example, oxygen bottles) that shall be located in an elevated position in the device 10 attached to one of the upright posts 17a, 17b and Figures 10a, 10b show brackets 26 of containers of medical products (for example, oxygen bottles) that shall be located at a lower position in the device 10 attached to a second connecting terminal 61 incorporated in one of the upright posts 17a, 17b (see also Figure 1). In both cases the bracket 26 comprises a central beam 71 to which are attached the cups 73 where the containers would be located and is structured so that it can be set in the unfolded state shown in Figures 9a and 10a for holding two containers or in the folded state shown in Figures 9b, 10b with a single cup for holding a container (the other is removed).

The device 10 may also include other brackets of medical and sanitary equipment arranged in appropriate locations thereof.

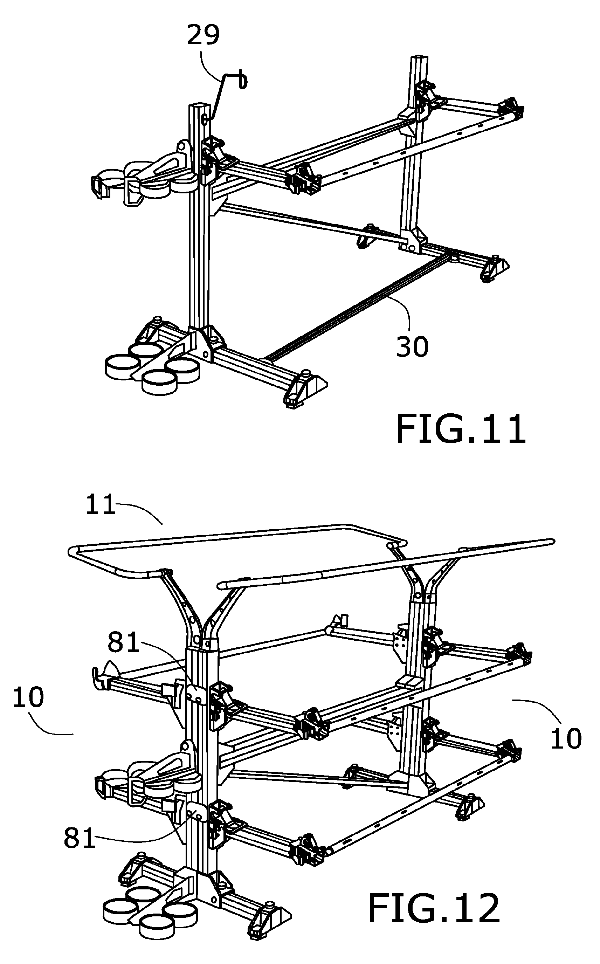

Figure 11 shows an embodiment of the device 10 with an intensive care unit at the bottom that includes two additional elements: a lower bar 30 attached to legs 15a, 15b for mounting thereon a drawer and a support 29 for bags of fluids.

With the above elements, the device 10 can be quickly installed without tools. The installation can be done in less than 10 minutes by two operators. The different elements of the device 10 are marked with instructions for easy installation without the need to consult the drawings.

In turn, due to its modular nature, the device 10 may take various configurations to meet different needs. In particular the disposition of the auxiliary elements (horizontal bar 25, supporting elements for curtains 27, bar 28 for intensive care unit and brackets 26) may differ from that shown in the Figures.

Figure 12 shows a device 11 which comprises two devices 10 as those that have been described, with the exception of the common legs, joined by their upright posts by means of parts 81 and having the clamping arms of each device 10 extended in opposite directions.

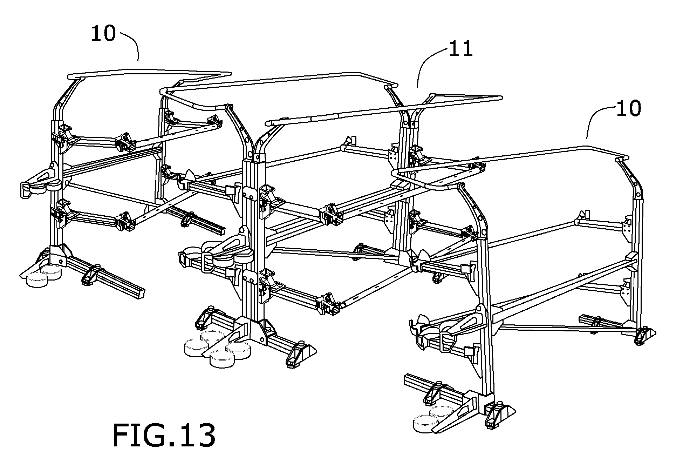

Figure 13 shows two devices 10 configured to support two litters and a tandem device 11 configured to support four litters as would be arranged in an area of an aircraft. The aisle between them meets the aeronautical regulations related to the width of the main aisles in emergency evacuations. Furthermore, the horizontal bars 25 on their sides provide a guide for evacuation of the aircraft preventing that the passengers may enter into the devices if the litters would not be installed. These horizontal bars 25 together with the supporting elements for curtains 27 provide a firm handhold along the aisles as required by aeronautic regulations.

If the above mentioned devices for aerial transportation of litters must be installed in an area previously occupied by passenger seats, their installation would take place after removing the seats, locating the devices under the luggage area.

As an installation example, the steps required to install a device 11 for aerial transportation of litters are detailed below:
a) having the legs 15a, 15b, with the first connecting terminals 31 mounted on them, in the correct position;
b) fixing the first connecting terminals 31 to the rails 13 of the aircraft in the proper position and blocking them afterwards;
c) installing the pairs of upright posts 17a and 17b on each leg 15a, 15b in the position marked for each of them;
d) installing the two horizontal beams 21 between the pairs of upright posts 17a and 17b;
e) installing the two adjustable diagonal elements 23 coupled in the pair of upright posts 17a and 17b coordinating the direction of these diagonal elements 23 with the direction of flight of the aircraft;
f) installing the supporting elements for curtains 27;
g) installing the pairs of clamping arms 19a, 19b in the pairs of upright posts 17a and 17b and the horizontal bars 25 at the ends of the pairs of clamping arms 19a, 19b;
h) tensioning the adjustable diagonal elements 23, eliminating clearances, until the whole assembly appears sufficiently stiff and blocking them afterwards;
i) installing the brackets 26 of sanitary devices as necessary.

Although the present invention has been described in connection with various embodiments, it will be appreciated from the specification that various combinations of elements, variations or improvements therein may be made, and are within the scope of the invention.

## Claims

1. Device for aerial transportation and treatment of patients in litters installable on rails (13) arranged on the floor of the cabin of an aircraft for installation of seats and/or other equipment on them; the device comprising at least the following structural elements: two legs (15a, 15b) arrangeable transversely to the rails (13), at least two upright posts (17a, 17b) attached to the legs (15a, 15b), one or more pairs of clamping arms (19a, 19b) for holding litters attached to the upright posts (17a, 17b) and reinforcing elements (21, 23) attached to the upright posts (17a, 17b), wherein:
- at least said legs (15a, 15b), said upright posts (17a, 17b) and said pair of clamping arms (19a, 19b) are made of hollow metallic profiles (20) of square transversal section;
- said device further comprises first connecting terminals (31) of the legs (15a, 15b) with the rails (13);
said device being **characterized in that**:
- said hollow metallic profiles (20) of square transversal section include in their four faces recessed channels (40) with undulated walls to cooperate with quick disconnect fixing fittings of other elements to said structural elements;
- said first connecting terminals (31) of the legs (15a, 15b) with the rails (13) are formed by a central hollow body (53) and two lateral bodies (55, 57), the central hollow body (53) being configured with a suitable shape to house inside it said legs (15a, 15b) enabling the displacement of the first connecting terminals (31) along them; the central hollow body (53) being provided with means allowing/preventing such displacement and control means for the correct positioning of the first connecting terminals (31) on the rails (13); the lateral bodies (55, 57) being provided with quick disconnect fixing fittings (56, 58) to the rails (13).

2. Device according to claim 1, wherein said two legs (15a, 15b) are arrangeable on rails (13) that are made of hollow metallic profiles whose upper face includes a recessed channel (40) with undulated walls to cooperate with quick disconnect fixing fittings of other elements on them.

3. Device according to claim 2, wherein:
- the means allowing/preventing the displacement of the first connecting terminals (31) on the rails (13) comprises an upper pin (35) with two parallel grooves and a bushing (36) with an internal positioner (38) cooperating with said grooves so that the upper pin (35) can placed in a first position allowing the displacement of the first connecting terminals (31) over the legs (15a, 15b) and in a second position where such displacement is blocked;
- the control means for the correct positioning of the first connecting terminals (31) on the rails (13) comprise a lower threaded bolt (37) and a cooperating nut (39) so that the lower threaded bolt (37) can be placed in a first position in which interferes with the rails (13) and in a second position in which it does not.

4. Device according to any of claims 1-3, wherein said reinforcing elements comprising a horizontal beam (21) configured by a hollow metallic profile (20) of square transversal section that includes in its four faces recessed channels (40) with undulated walls to cooperate with quick disconnect fixing fittings of other elements to said horizontal beam (21) and an adjustable diagonal element (23) attached to two vertical upright posts (17a, 17b).

5. Device according to claim 4, wherein the upright posts (17a, 17b) include second connecting terminals (61) with the legs (15a, 15b) and fourth connecting terminals (65) with the horizontal beam (21), wherein the clamping arms (19a, 19b) include third connecting terminals (63) with the upright posts (17a, 17b) and wherein the union of said connecting terminals (61, 65, 63) to said structural elements is effected by quick disconnect fixing fittings cooperating with the recessed channels (49) of their profiles and/or pins cooperating with holes provided in said connecting terminals (61, 65, 63) and in the floor of said recessed channels (40).

6. Device according to any of claims 4-5, wherein the diagonal adjustable element (23) comprises threaded terminals (41) for adjustment to the upright posts (17a, 17b), such that by rotation of the diagonal element (23) clearances are eliminated and greater rigidity is achieved, and a retractable braking mechanism (43) in one of its ends which prevents relaxation during flight of the aircraft.

7. Device according to any of claims 1-6 , wherein each pair of clamping arms (19a, 19b) for holding litters comprises receiving elements (45a, 45b, 45c, 45d) of the litter sticks joined to their upper faces and stops (47a, 47b 47c, 47d) attached to their outer side faces so that they can adopt a first position facing said receiving elements (45a, 45b, 45c, 45d) to prevent longitudinal movements of the litter and a second lowered position with respect to said receiving elements (45a, 45b, 45c, 45d) allowing said longitudinal movements of the litter.

8. Device according to any of claims 1-7, further comprising at least one horizontal bar (25) attached to the outer ends of a pair of clamping arms (19a, 19b) for holding litters, provided with slits (51) intended for the installation of brackets of medical equipment as well as projections (52) between slits (51) to minimize the rotation of said equipment.

9. Device according to any of claims 1-8, further comprising brackets (26) of medical equipment connected to any of its structural elements and supporting elements for privacy curtains (27) attached to the upright posts (17a, 17b).

10. Device according to any of claims 1-9, also comprising a lower bar (30) for supporting a drawer.

11. Device according to any of claims 1-10, wherein said hollow metallic profiles (20) are made of aluminum.

12. Device (10) according to any of claims 1-11, comprising two upright posts (17a, 17b) and two pairs of clamping arms (19a, 19b).

13. Device (11) according to any of claims 1-11, comprising two pairs of upright posts (17a, 17b) and two pairs of clamping arms (19a, 19b) connected to each pair of upright posts (17a, 17b), said pairs of upright posts (17a, 17b) being joined together by parts (81) and said pair of clamping arms (19a, 19b) being extended in opposite directions.

## Patentansprüche

1. Vorrichtung für den Lufttransport und die Behandlung von Patienten in Tragen, die auf Schienen (13) installierbar sind, die auf dem Boden der Kabine eines Flugzeugs angeordnet und zum Installieren von Sitzen und/oder anderen Einrichtungen darauf vorgesehen sind, wobei die Vorrichtung mindestens die Strukturelemente aufweist: zwei quer zu den Schienen (13) anordenbare Schenkel (15a, 15b), mindestens zwei an den Schenkeln (15a, 15b) befestigte aufrechte Ständer (17a, 17b), ein oder mehrere Paare von Klemmarmen (19a, 19b) zum Halten von an den auchrechten Ständern (17a, 17b) befestigten Tragen und an den aufrechten Ständern (17a, 17b) befestigte Verstärkungselemente (21, 23),
wobei die mindestens zwei Schenkel (15a, 15b), die aufrechten Ständer (17a, 17b) und das Paar Klemmarme (19a, 19b) aus hohlen Metallprofilen (20) mit einem quadratischen Querschnitt hergestellt sind, und
wobei die Vorrichtung ferner eine erste Verbindungsklemme (31) zum Verbinden der Schenkel (15a, 15b) mit den Schienen (13) aufweist,
wobei die Vorrichtung **dadurch gekennzeichnet ist, dass**
die hohlen Metallprofile (20) mit einem quadratischen Querschnitt in ihren vier Flächen vertiefte Kanäle (40) mit gewellten Wänden aufweisen, die dazu geeignet sind, mit Schnellverschlusskupplungen anderer Elemente zusammenzuwirken, um diese mit den Strukturelementen zu verbinden;
die ersten Verbindungsklemmen (31) zum Verbinden der Schenkel (15a, 15b) mit den Schienen (13) durch ein mittiges Hohlelement (53) und zwei Seitenelemente (55, 57) gebildet werden, wobei das mittige Hohlelement (53) in einer geeigneten Form konfiguriert ist, um die Schenkel (15a, 15b) aufzunehmen und eine Verschiebung der ersten Verbindungsklemmen (31) entlang der Schenkel zu ermöglichen, wobei das mittige Hohlelement (53) eine Einrichtung aufweist, die eine derartige Verschiebung ermöglicht/verhindert, und eine Steuereinrichtung zum korrekten Positionieren der ersten Verbindungsklemmen (31) auf den Schienen (13), wobei die Seitenelemente (55, 57) Schnellverschlusskupplungen (56, 58) für eine Verbindung mit den Schienen (13) aufweisen.

2. Vorrichtung nach Anspruch 1, wobei die beiden Schenkel (15a, 15b) auf Schienen (13) angeordnet sind, die aus hohlen Metallprofilen hergestellt sind, deren obere Fläche einen vertieften Kanal (40) mit gewellten Wänden aufweist, der dazu geeignet ist, mit Schnellverschlusskupplungen anderer Elemente zusammenzuwirken, um diese damit zu verbinden.

3. Vorrichtung nach Anspruch 2, wobei
die Einrichtung zum Ermöglichen/Verhindern einer Verschiebung der ersten Verbindungsklemme (31) auf den Schienen (13) einen oberen Stift (35) mit zwei parallelen Nuten und eine Buchse (36) mit einer inneren Positionierungseinrichtung (38) aufweist, die mit den Nuten zusammenwirkt, so dass der obere Stift (35) in einer ersten Position angeordnet werden kann, in der eine Verschiebung der ersten Verbindungsklemmen (31) auf den Schenkeln (15a, 15b) möglich ist, und in einer zweiten Position, in der eine derartige Verschiebung blockiert ist,
die Einstelleirichtung für die korrekte Positionierung der ersten Verbindungsklemmen (31) auf den Schienen (13) einen unteren Gewindebolzen (37) und eine damit zusammenwirkende Mutter (39) aufweist, so dass der untere Gewindebolzen (37) in einer ersten Position angeordnet werden kann, in der er mit den Schienen (13) wechselwirkt, und in einer zweiten Position, in der er nicht mit den Schienen wechselwirkt.

4. Vorrichtung nach einem der Ansprüche 1 bis 3, wobei die Verstärkungselemente einen horizontalen Träger (21) aufweisen, der konfiguriert ist durch
ein hohles Metallprofil (20) mit einem quadratischen Querschnitt, das auf seinen vier Flächen vertiefte Kanäle (40) mit gewellten Wänden aufweist, die dazu geeignet sind, mit Schnellverschlusskupplungen anderer Elemente zusammenzuwirken, um diese mit dem horizontalen Träger (21) zu verbinden, und
ein an zwei aufrechten Ständern (17a, 17b) befestigtes einstellbares diagonales Element (23).

5. Vorrichtung nach Anspruch 4, wobei die aufrechten Ständer (17a, 17b) zweite Verbindungsklemmen (61) für eine Verbindung mit den Schenkeln (15a, 15b) und vierte Verbindungsklemmen (65) für eine Verbindung mit dem horizontalen Träger (21) aufweisen, wobei die Klemmarme (19a, 19b) dritte Verbindungsklemmen (63) für eine Verbindung mit den aufrechten Ständern (17a, 17b) aufweisen, und wobei die Verbindung der Verbindungsklemmen (61, 65, 63) mit den Strukturelementen durch Schnellverschlusskupplungen bewirkt wird, die mit den vertieften Kanälen (49) ihrer Profile wechselwirken, und/oder durch Stifte, die mit in den Verbindungsklemmen (61, 65, 63) und im Boden der vertieften Kanäle (40) ausgebildeten Löchern zusammenwirken.

6. Vorrichtung nach Anspruch 4 oder 5, wobei das diagonale einstellbare Element (23) mit Gewinde versehene Verbindungselemente (41) für eine einstellbare Verbindung mit den vertikalen Ständern (17a, 17b) derart beinhaltet, dass durch eine Drehbewegung des diagonalen Elements (23) Zwischenräume eliminiert werden und eine größere Steifigkeit erzielt wird, und einen einfahrbaren Bremsmechanismus (43) an einem seiner Enden aufweist, der eine Loslösung während des Flugs des Flugzeugs verhindert.

7. Vorrichtung nach einem der Ansprüche 1 bis 6, wobei jedes Paar Klemmarme (19a, 19b) zum Halten von Tragen Aufnahmeelemente (45a, 45b, 45c, 45d) für Tragenstangen aufweist, die mit ihren oberen Flächen verbunden sind, und Anschläge (47a, 47b, 47c, 47d), die an ihren Außenseitenflächen befestigt sind, so dass sie eine erste Position annehmen können, in der sie den Aufnahmeelementen (45a, 45b, 45c, 45d) zugewandt sind und Längsbewegungen der Trage verhindert werden, und eine zweite abgesenkte Position bezüglich den Aufnahmeelementen (45a, 45b, 45c, 45d), in der Längsbewegungen der Trage möglich ist.

8. Vorrichtung nach einem der Ansprüche 1 bis 7, ferner mit mindestens einer an den Außenenden eines Paars Klemmarmen (19a, 19b) zum Halten von Tragen befestigten horizontalen Stange (25) mit Schlitzen (51), die für eine Installation von Haltern für medizinische Geräte vorgesehen sind, sowie mit Vorsprüngen (52) zwischen den Schlitzen (51) zum Minimieren einer Drehbewegung der Geräte.

9. Vorrichtung nach einem der Ansprüche 1 bis 8, ferner mit Haltern (26) für medizinische Geräte, die mit einem ihrer Strukturelemente verbunden sind, und mit Halteelementen für Sichtschutzvorhänge (27), die an den aufrechten Ständern (17a, 17b) befestigt sind.

10. Vorrichtung nach einem der Ansprüche 1 bis 9, ferner mit einer unteren Stange (30) zum Halten einer Schublade.

11. Vorrichtung nach einem der Ansprüche 1 bis 10, wobei die hohlen Metallprofile (20) aus Aluminium hergestellt sind.

12. Vorrichtung nach einem der Ansprüche 1 bis 11, mit zwei aufrechten Ständern (17a, 17b) und zwei Paaren von Klemmarmen (19a, 19b).

13. Vorrichtung nach einem der Ansprüche 1 bis 11, mit zwei Paaren aufrechter Ständer (17a, 17b) und zwei Paaren Klemmarmen (19a, 19b), die mit jedem Paar aufrechter Ständer (17a, 17b) verbunden sind, wobei die Paare aufrechter Ständer (17a, 17b) durch Teile (81) miteinander verbunden sind, und wobei das Paar Klemmarme (19a, 19b) sich in entgegengesetzte Richtungen erstreckt.

## Revendications

1. Dispositif pour le transport aérien et le traitement de patients en civières, pouvant être installé sur des rails (13) agencés sur le sol de la cabine d'un avion pour l'installation, sur ces derniers, de sièges et/ou d'un autre équipement ; le dispositif comprenant au moins les éléments structurels suivants : deux pattes (15a, 15b) pouvant être agencées transversalement par rapport aux rails (13), au moins deux montants droits (17a, 17b) fixés aux pattes (15a, 15b), une ou plusieurs paires de bras de serrage (19a, 19b) pour maintenir les civières fixées aux montants droits (17a, 17b) et des éléments de renforcement (21, 23) fixés aux montants droits (17a, 17b), dans lequel :
au moins lesdites pattes (15a, 15b), lesdits montants droits (17a, 17b) et ladite paire de bras de serrage (19a, 19b) sont réalisés avec des profilés métalliques creux (20) de section transversale carrée ;
ledit dispositif comprend en outre des premières terminaisons de raccordement (31) des pattes (15a, 15b) avec les rails (13) ;
ledit dispositif étant **caractérisé en ce que** :
lesdits profilés métalliques creux (20) de section transversale carrée comprennent dans leurs quatre faces, des canaux évidés (40) avec des parois ondulés pour coopérer avec des fixations à déconnexion rapide d'autres éléments par rapport auxdits éléments structurels ;
lesdites premières terminaisons de raccordement (31) des pattes (15a, 15b) avec les rails (13) sont formées avec un corps creux central (53) et deux corps latéraux (55, 57), le corps creux central (53) étant configuré avec une forme appropriée pour loger à l'intérieur de ce dernier lesdites pattes (15a, 15b) permettant le déplacement des premières terminaisons de raccordement (31) le long de ces dernières ; le corps creux central (53) étant prévu avec des moyens permettant/empêchant un tel déplacement et des moyens de contrôle pour le bon positionnement des premières terminaisons de raccordement (31) sur les rails (13) ; les corps latéraux (55, 57) étant prévus avec des fixations à déconnexion rapide (56, 58) par rapport aux rails (13).

2. Dispositif selon la revendication 1, dans lequel lesdites deux pattes (15a, 15b) peuvent être agencées sur des rails (13) qui sont réalisés à partir de profilés métalliques creux dont la face supérieure comprend un canal évidé (40) avec des parois ondulées pour coopérer avec des fixations à déconnexion rapide d'autres éléments sur ces derniers.

3. Dispositif selon la revendication 2, dans lequel :
les moyens permettant/empêchant le déplacement des premières terminaisons de raccordement (31) sur les rails (13) comprennent une broche supérieure (35) avec deux rainures parallèles et une douille (36) avec un dispositif de positionnement interne (38) coopérant avec lesdites rainures de sorte que la broche supérieure (35) peut être placée dans une première position permettant le déplacement des premières terminaisons de raccordement (31) sur les pattes (15a, 15b) et dans seconde position dans laquelle un tel déplacement est empêché ;
les moyens de contrôle pour le bon positionnement des premières terminaisons de raccordement (31) sur les rails (13) comprennent un boulon fileté inférieur (37) et un écrou coopératif (39) de sorte que le boulon fileté inférieur (37) peut être placé dans une première position dans laquelle il interfère avec les rails (13) et dans une seconde position dans laquelle il n'interfère pas.

4. Dispositif selon l'une quelconque des revendications 1 à 3, dans lequel lesdits éléments de renforcement comprennent une poutre horizontale (21) configurée par le profilé métallique creux (20) de section transversale carrée qui comprend dans ses quatre faces, des canaux évidés (40) avec des parois ondulées pour coopérer avec des fixations à déconnexion rapide d'autres éléments par rapport à ladite poutre horizontale (21) et un élément diagonal ajustable (23) fixé aux deux montants droits verticaux (17a, 17b).

5. Dispositif selon la revendication 4, dans lequel les montants droits (17a, 17b) comprennent des deuxièmes terminaisons de raccordement (61) avec les pattes (15a, 15b) et des quatrièmes terminaisons de raccordement (65) avec la poutre horizontale (21), dans lequel les bras de serrage (19a, 19b) comprennent des troisièmes terminaisons de raccordement (63) avec les montants droits (17a, 17b) et dans lequel l'union desdites terminaisons de raccordement (61, 65, 63) et desdits élément structurels est effectuée par des fixations à déconnexion rapide coopérant avec les canaux évidés (49) de leurs profilés et/ou broches coopérant avec des trous prévus dans lesdites terminaisons de raccordement (61, 65, 63) et dans le plancher desdits canaux évidés (40).

6. Dispositif selon l'une quelconque des revendications 4 à 5, dans lequel l'élément diagonal ajustable (23) comprend des terminaisons filetées (41) pour l'ajustement par rapport aux montants droits (17a, 17b) de sorte que par la rotation de l'élément diagonal (23), des jeux sont éliminés et on obtient une plus grande rigidité, et un mécanisme de freinage rétractable (43) dans l'une de ses extrémités qui empêche le relâchement pendant le vol de l'avion.

7. Dispositif selon l'une quelconque des revendications 1 à 6, dans lequel chaque paire de bras de serrage (19a, 19b) pour maintenir les civières comprend des éléments de réception (45a, 45b, 45c, 45d) des tiges de civière assemblées à leurs faces supérieures et butées (47a, 47b, 47c, 47d) fixées à leurs faces latérales externes de sorte qu'elles peuvent adopter une première position faisant face auxdits éléments de réception (45a, 45b, 45c, 45d) pour empêcher les mouvements longitudinaux de la civière et une seconde position abaissée par rapport auxdits éléments de réception (45a, 45b, 45c, 45d) permettant lesdits mouvement longitudinaux de la civière.

8. Dispositif selon l'une quelconque des revendications 1 à 7, comprenant en outre au moins une barre horizontale (25) fixée aux extrémités externes d'une paire de bras de serrage (19a, 19b) pour maintenir les civières, prévus avec des fentes (51) prévues pour l'installation de supports d'équipement médical telles que des saillies (52) entre les fentes (51) pour minimiser la rotation dudit équipement.

9. Dispositif selon l'une quelconque des revendications 1 à 8, comprenant en outre des supports (26) d'équipement médical raccordés à l'un quelconque de ses éléments structurels et éléments de support pour des rideaux de séparation (27) fixés aux montants droits (17a, 17b).

10. Dispositif selon l'une quelconque des revendications 1 à 9, comprenant en outre une barre inférieure (30) pour supporter un tiroir.

11. Dispositif selon l'une quelconque des revendications 1 à 10, dans lequel lesdits profilés métalliques creux (20) sont réalisés à partir d'aluminium.

12. Dispositif (10) selon l'une quelconque des revendications 1 à 11, comprenant deux montants droits (17a, 17b) et deux paires de bras de serrage (19a, 19b).

13. Dispositif (11) selon l'une quelconque des revendications 1 à 11, comprenant deux paires de montants droits (17a, 17b) et deux paires de bras de serrage (19a, 19b) raccordés à chaque paire de montants droits (17a, 17b), lesdites paires de montants droits (17a, 17b) étant assemblées par des parties (81) et ladite paire de bras de serrage (19a, 19b) étant étendue dans des directions opposées.
